# EUROPÄISCHE PATENTANMELDUNG

(11) **EP 0 763 717 A2**
(43) Veröffentlichungstag der Anmeldung: **19.03.1997**
(21) Anmeldenummer: 96114508.3
(22) Anmeldetag: 11.09.1996
(51) Int. Cl.: G01F 1/66

(54) **Vorrichtung zur Ultraschall-Durchflussmessung**

(30) Priorität: 13.09.1995 DE 19533814
(71) Anmelder: IWK Regler und Kompensatoren GmbH, 76297 Karlsruhe (DE); Forschungszentrum Karlsruhe GmbH, 76133 Karlsruhe (DE)
(72) Erfinder: Hügel, Michael, 76344 Eggenstein-Leopoldshafen (DE); Mall, Horst, 76131 Karlsruhe (DE); Schlote-Holubek, Klaus, 76199 Karlsruhe (DE); Metzger, Hans-Dieter, 76327 Pfinztal (DE)
(74) Vertreter: Dipl.-Ing. Heiner Lichti Dipl.-Phys. Dr.rer.nat. Jost Lempert Dipl.-Ing. Hartmut Lasch

(57) **Zusammenfassung**

Eine Vorrichtung (1) zur Ultraschall-Durchflußmessung von Fluiden in Rohrleitungen, insbesondere zur Verbrauchsmessung in Heizungsanlagen, mit einem vom Fluid durchströmten Meßkanal (8) und mit Ultraschallwandlern (14, 15), wobei die Vorrichtung (1) auf kurzer Einbaulänge für eine große Meßstrecke bei hoher Empfindlichkeit und Genauigkeit der Messung sorgt, zeichnet sich durch einen über seine Länge hin stetig seine Richtung gegenüber einem Einlaß- und Auslaßstutzen (3, 4) verändernden Meßkanal (8) aus.

## Beschreibung

Die Erfindung betrifft eine Vorrichtung zur Ultraschall-Durchflußmessung von Fluiden in Rohrleitungen, insbesondere zur Verbrauchsmessung in Heizungsanlagen, mit einem vom Fluid durchströmten Meßkanal und mit Ultraschallwandlern.

Eine derartige Vorrichtung ist beispielsweise aus der DE-GM 89 04 673 bekannt. Die Durchflußmeßeinrichtung weist ein Mantelrohr mit einem Einlaß- und einem Auslaßstutzen auf und umschließt ein vom zu messenden, flüssigen Medium durchströmtes Meßrohr. In das gerade ausgebildete Meßrohr sind zwei in axialer Richtung beabstandete Ultraschallmeßköpfe eingefügt. Den Ultraschallmeßköpfen gegenüberliegend sind Reflektoren unter einem Winkel gegen die Strömungsrichtung in entsprechend geneigten Wandteilen des Meßrohres eingelassen sowie zwischen diesen Reflektoren weitere Reflektoren an einander gegenüberliegenden Wandteilen mit parallel zur Strömungsrichtung liegenden Reflexionsflächen. Hierdurch gelangt das ausgesandte Strahlenbündel nach mehrfachem Durchtritt durch das Medium an den Empfangsmeßkopf. Zwar ergibt sich aufgrund dieses Aufbaus eine gegenüber der Einbaulänge erhöhte Durchtrittsstrecke für den Ultraschall durch das Medium, jedoch ist die so zu erzielende Meßstrecke auch weiterhin durch die genormte Einbaulänge zwischen den Rohranschlüssen begrenzt. Durch die im Eintrittsbereich in das Meßrohr vorhandenen Kanten sowie die im Meßrohr durch die Abwinkelung der Wandung gebildeten Kanten ergeben sich aufgrund der entstehenden Wirbel Druckverluste, die zu einer Beeinträchtigung der Messung führen.

Eine weitere Vorrichtung, bei der die Meßstrecke ebenfalls der Einbaulänge entspricht, ist aus der EP-A-0 303 255 bekannt. Auch hier weist das Meßrohr mit im wesentlichen rechteckförmigem Innenquerschnitt Schrägen im den Ultraschallwandlern gegenüberliegenden Bereich der Meßrohrwand auf. Durch die starke Neigung der Reflexionsflächen in einem Bereich von 45° ergibt sich hinter diesen in Flußrichtung des Mediums eine starke Wirbelbildung, die zu Strömungsverlusten und damit zu einer Meßungenauigkeit führt.

Werden zur Vermeidung derartiger Schrägen innerhalb des Meßrohres Ultraschallwandler verwendet, die Ultraschallstrahlen unter einem Winkel von 45° gegenüber ihrer Symmetrieachse aussenden (DE-OS 35 44 456), so ist eine Metallkapselung der Wandler nicht möglich, da dies eine zu große Dämpfung der Ultraschallstrahlen hervorruft. Eine Kunststoffkapselung weist jedoch keine hohe Standfestigkeit, insbesondere gegenüber agressiven Medien, auf. Entsprechend kommt es nach relativ kurzer Zeit zu Undichtigkeiten und damit zum Ausfall des betreffenden Ultraschallwandlers.

Bei einem aus der DE-PS 29 24 561 bekannten Meßwertgeber ist das die Meßstrecke bildende Rohr zur Erhöhung der Meßstrecke U-förmig gebogen. Das U-förmig gebogene Rohr ragt dabei mit seinen Schenkeln jeweils in eine der durch zwei großräumige, quaderförmige Hohlkörper gebildeten Verteilerkammern. Die Verteilerkammern weisen dabei jeweils unterhalb des Einlasses in das Rohr einen Zufluß und einen Abfluß auf. Aufgrund der sich dadurch ergebenden Strömungsumlenkung, insbesondere im scharfkantigen Einlaßbereich bzw. Auslaßbereich des U-Rohrs ergeben sich durch Wirbelbildung starke Druckabfälle und damit Strömungsverluste. Des weiteren ist ein derartiger Meßwertgeber nicht funktionsfähig, da keine Reflektorflächen vorhanden sind, die durch Reflexionen dafür sorgen, daß das ausgesandte Strahlenbündel auf den als Empfänger ausgebildeten Ultraschallwandler auftritt.

Der Erfindung liegt daher die Aufgabe zugrunde, unter Vermeidung der vorgenannten Nachteile eine Vorrichtung der eingangs genannten Art zu schaffen, welche auf kurzer Einbaulänge für eine große Meßstrecke bei hoher Empfindlichkeit und Genauigkeit der Messung sorgt.

Erfindungsgemäß wird die genannte Aufgabe durch eine Vorrichtung zur Ultraschall-Durchflußmessung gelöst, die durch einen über seine Länge hin stetig seine Richtung gegenüber einem Einlaß- und Auslaßstutzen verändernden Meßkanal gekennzeichnet ist.

Durch den stetig seine Richtung verändernden Meßkanal ergibt sich eine stetige Änderung des Strömungsweges, so daß lediglich eine geringe Neigung zur Wirbelbildung in Flußrichtung vorliegt. Durch einen sich stetig ändernden Meßkanal ist es möglich, bei kurzer Einbaulänge hohe Meßstrecken zu erreichen. Der Übergang von der ankommenden Rohrströmung auf den Meßkanal erfolgt durch den sich stetig verjüngenden Einlaßbereich ebenfalls stetig, so daß die Druckverluste auch im Einlaßbereich und Übergangsbereich zum Meßkanal sehr gering sind. Totwassergebiete mit Sekundärwirbelbildung können sich aufgrund der vorliegenden Stetigkeit nicht bilden. Gleiches gilt dann auch für den Übergang vom Meßkanal in den sich stetig erweiternden Auslaßbereich. Dies ist aufgrund der unstetigen Einlässe aber auch Auslässe beim Stand der Technik nicht der Fall, so daß dort erhebliche Druckverluste entstehen.

Um für eine optimale Ausbildung der Vorrichtung bei geringer Baulänge zu sorgen, ist weiterhin vorgesehen, daß der Auslaßbereich parallel zum Einlaßbereich gegenüber diesem um 180° gedreht angeordnet ist. Auf diese Weise können auch die Ultraschallmeßköpfe bzw. Ultraschallwandler derart bei nach unten abgewinkeltem Meßkanal oberhalb des Einlaßbereichs bzw. Auslaßbereichs, insbesondere des direkten stetigen Einlasses bzw. Auslasses in den Meßkanal, an einer gemeinsamen Gehäusewandung angeordnet werden, daß die Ultraschallstrahlenbündel optimal in den Meßkanal ausgesandt bzw. aus diesem empfangen werden können. Des weiteren können Einlaß- und Auslaßstutzen fluchtend zueinander angeordnet werden.

In bevorzugter Ausgestaltung ist vorgesehen, daß der sich über seine Länge stetig verändernde Meßkanal ringförmig gebogen, also als Kreisbogen ausgebildet ist. Ein derartiger Ringkanal ist bei geringer Einbaulänge optimal zwischen Ein- und Auslaßstutzen anordbar und sorgt so für eine große Meßstrecke. Auch kann bei einer solchen Ausbildung der Einlaßbereich stetig und optimal in den Ringkanal ohne hohe Druckverluste übergehen. Anstelle einer ringförmigen Ausbildung des Meßkanals ist auch eine ellipsenförmige Ausbildung möglich. Aufgrund dieser Ausgestaltungen des Meßkanals als Ringkanal bzw. ellipsenförmig ausgebildetem Kanal wird dafür gesorgt, daß die Wirbelbildung in Flußrichtung gering ist, so daß sich auch nur geringe Druckverluste in der hydraulischen Meßstrecke ergeben. Das Verhältnis von Einbaulänge a der Vorrichtung zur Länge b des Meßkanals beträgt zur Optimierung von Meßstrecke und Einbaulänge bevorzugt 1:2,5 bis 3.

Dadurch, daß innerhalb des Meßkanals an dessen Wandungen Ultraschall-Reflektorflächen angebracht sind, ergibt sich dann weiterhin eine Vergrößerung der Durchtrittsfläche der Ultraschallstrahlenbündel durch das Medium bzw. das Fluid, so daß hierdurch die Meßgenauigkeit und Empfindlichkeit gegenüber den aus dem Stand der Technik bekannten Vorrichtungen erhöht ist.

Um nun eine optimale Übertragung des Ultraschallstrahlenbündels vom Sender zum Empfänger durch Reflexion zu ermöglichen, sind die Reflektorflächen an der in Richtung des Meßkanalinneren gekrümmten Innenwandung des Meßkanals als plane, ebene Fläche ausgebildet. Hierzu sind vorzugsweise entlang des Strömungsweges des Fluids beabstandet zueinander an der durch die Innenwandung des Meßkanals gebildeten seitlichen Begrenzungsfläche festgelegte, gerade metallische Spiegel als Reflektorflächen vorgesehen. Die der Innenwandung gegenüberliegende seitliche Begrenzungsfläche der Außenwandung im Inneren des Meßkanals ist dabei bevorzugt mit einer metallischen Schicht versehen. Da die Außenwandung gebogen ausgebildet ist, wird so das vom Ultraschallsender in das Fluid abgegebene Ultraschallstrahlungsbündel an den metallischen Innenspiegeln gespiegelt, d.h. Einfallswinkel gleich Ausfallswinkel, und gelangt dann zur metallischen Außenwand, die aufgrund ihrer gebogenen Ausbildung dann als eine Art Hohlspiegel mit dessen bekannten Eigenschaften der Bündelung bzw. Fokussierung wirkt. Auf diese Weise gelangen dann die durch die Außenwand reflektierten, gebündelten und fokussierten Strahlenbündel zum nächsten in Strömungsrichtung oder entgegen dieser liegenden Innenspiegel, auf dem dann wiederum eine Spiegelung erfolgt. Diese Reflexionen durch Spiegelung und Bündelung zwischen metallischen Innenspiegeln und metallischer Außenschicht erfolgen dann so lange, bis das Strahlenbündel den Meßkanal durchlaufen hat und zum als Empfänger dienenden Ultraschallwandler gelangt ist. Aufgrund der Anordnung und Ausbildung als plane, ebene Spiegelflächen an der inneren seitlichen Begrenzungsfläche im Inneren des Meßkanals sowie der metallischen Beschichtung an der anderen, gekrümmten, gegenüberliegenden Begrenzungsfläche wird so dafür gesorgt, daß auch die Randstrahlen des Ultraschallbündels jeweils über den Meßkanal gleiche Lauflänge aufweisen und so keine Verfälschung des Meßergebnisses erfolgt. Außerdem wird aufgrund der nun auftretenden Spiegelung und Fokussierung für einen äußerst geringen Signalverlust gesorgt, es wird also fast die gesamte Signalenergie am Empfänger wiedergewonnen. Ein Streuverlust tritt nicht auf, und es kann deshalb mit kleinster Einspeisungsenergie ein noch meßbares Signal erreicht werden. Hierdurch ist dann dem Eichgesetz Genüge getan, welches besagt, daß die Batterie sechs Jahre reichen muß und erst dann die Notwendigkeit bestehen darf, sie auszutauschen.

Ist das Strahlenbündel vom Ultraschallsender zum Empfänger gelangt, so wird anschließend der Empfänger zum Sender, so daß der Ultraschall alternierend in und entgegen der Strömungsrichtung des Fluids gesendet wird. Aus den daraus resultierenden Laufzeitunterschieden des Ultraschalls wird dann nach der sogenannten Laufzeitdifferenzmethode die Strömungsgeschwindigkeit und damit der Durchfluß bestimmt.

In Weiterbildung ist vorgesehen, daß auf der metallischen Schicht beabstandet zueinander entlang des Strömungsweges Dämpfungskörper angeordnet sind. Auf diese Weise wird jeweils eine feste Reflexionsfläche auf der metallischen Schicht festgelegt. Insbesondere bei einem Ringkanal, bei dem der Krümmungsradius der Reflektorflächen an der Außenwandung des Meßkanals gleich dem Krümmungsradius der gesamten Außenwandung ist, können so die Reflektorflächen durch Anordnung der Dämpfungskörper an den äußeren radialen Begrenzungsflächen und der Spiegel an den inneren radialen Begrenzungsflächen derart aufeinander abgestimmt werden, daß das vom Ultraschallsender in das Medium abgegebene Strahlenbündel ohne Laufzeitunterschiede seiner Randstrahlen an den geraden metallischen Spiegeln zur metallischen Außenwand gespiegelt und von dort aufgrund der Ausbildung als leichter Hohlspiegel fokussierend zum nächsten Innenspiegel entlang des Strömungsweges reflektiert wird. Durch die Dämpfungskörper an der äußeren radialen Begrenzungsfläche wird dort für die notwendige Schallabsorption gesorgt, so daß in die Wandung des Meßkanals eindringende Ultraschallstrahlen, die durch erneute Brechung nach innen in das Medium wieder eintreten, durch die Dämpfungskörper absorbiert werden. Hierdurch wird verhindert, daß in das Medium zurückgebrochene Strahlen zum empfangenden Ultraschallwandler gelangen und dort als störendes Signal in Erscheinung treten. Das Vorangehende gilt natürlich auch für einen ellipsenförmig ausgebildeten Meßkanal.

Um nun den Meßkanal sowie den Einlaß- und Auslaßbereich optimal ausbilden zu können, sind zwei identisch ausgebildete Innenteile vorgesehen. Aufgrund dieser identisch ausgebildeten, den Meßkanal sowie den Einlaß- und Auslaßbereich ausbildenden Innenteile kann so auf einfache Weise raumsparend ein Durchflußmeßgerät hergestellt werden. Es sind lediglich identische Teile herzustellen, welche durch Aneinandersetzen und Einfügen in das Gehäuse den Meßkanal sowie den Einlaß- und Auslaßbereich ausbilden. Aufgrund dieser wenigen Teile ist so der Fertigungsprozeß eines solchen Durchflußmeßgerätes vereinfachbar.

Um durch weitere Maßnahmen die störende Streustrahlenbildung zu verhindern, ist bevorzugt vorgesehen, daß die beiden Innenteile aus Kunststoff sind.

In Weiterbildung sind Öffnungen in den Wandungen der Innenteile im Ein- bzw. Auslaßbereich vor Übergang in den Meßkanal vorgesehen. Aufgrund dieser Öffnungen und zwischen dem durch die Innenteile gebildeten Ein- und Auslaßbereich sowie Meßkanal und dem Gehäuse vorgesehener Zwischenräume kann Fluid vor Eintreten in den Meßkanal in die Zwischenräume gelangen, so daß die Wandung des Meßkanals über ihren gesamten Verlauf praktisch druckfrei ist.

Um nun die Innenteile optimal miteinander verbinden zu können, sind in bevorzugter Ausgestaltung als Halterungen vorspringende Wülste zur Verbindung der den Meßkanal sowie den Einlaß- und Auslaßbereich ausbildenden Innenteile vorgesehen, die jeweils in komplementär ausgebildete Aussparungen des jeweils anderen Innenteils haltend eingreifen. So wird durch einfache und optimale Weise für ein Festlegen der Innenteile aneinander gesorgt. Während der Meßkanal beim bekannten Stand der Technik im allgemeinen rohrförmig ausgebildet ist, kann er auch einen im wesentlichen rechteckförmigen Querschnitt aufweisen. Hierdurch ist eine einfache Ausbildung der Innenteile möglich.

Zur einfachen Fertigung des Durchflußmeßgerätes ist vorgesehen, daß das die Innenteile aufnehmende Gehäuse durch zwei Gehäuseteile gebildet ist. Die Gehäuseteile sind dabei bevorzugt durch Verschrauben aneinander festgelegt. Entsprechend können die einzelnen das Durchflußmeßgerät bildenden Teile einfach aneinander festgelegt und ineinander eingelegt werden, wodurch sich die Fertigung insgesamt vereinfacht.

Um nun die Ultraschallwandler optimal in bezug auf den Meßkanal sowie den Einlaß- und Auslaßbereich anordnen zu können, weisen die Innenteile Ausnehmungen zur Aufnahme der Meßköpfe der Ultraschallwandler auf. Die Meßköpfe werden dabei jeweils bevorzugt zur Hälfte von jedem Innenteil umschlossen. So ist auch hier für eine symmetrische Ausbildung der Innenteile gesorgt. Die Ultraschallwandler können so ideal gegenüber dem Meßkanal zur Aussendung ihrer Ultraschallwellen angeordnet werden.

Die beschriebene Vorrichtung zur Ultraschall-Durchflußmessung eignet sich insbesondere für die Anwendung in einem Wärmezähler, wozu neben der Durchflußmenge auch die Temperaturdifferenz zwischen einem Vor- und einem Rücklauf erfaßt wird. Hierzu ist insbesondere ein in den Strömungsweg des Fluids im Auslaßstutzen einragender Temperaturfühler vorgesehen. Durch diese Anordnung des Temperaturfühlers wird die eigentliche Meßstrecke sowie deren Ausbildung nicht berührt.

Insgesamt wird so eine Vorrichtung zur Ultraschall-Durchflußmessung von Fluiden geschaffen, welche gegenüber bekannten Vorrichtungen eine wesentliche Steigerung des Meßdynamikbereiches bei geringen Druckverlusten aufweist.

Weitere Vorteile und Merkmale der Erfindung ergeben sich aus den Ansprüchen und aus der nachfolgenden Beschreibung, in der ein Ausführungsbeispiel unter Bezugnahme auf die Zeichnungen im einzelnen erläutert ist. Dabei zeigt:
- Fig. 1: eine Vorrichtung zur Ultraschall-Durchflußmessung mit ringförmigem Meßkanal im Schnitt;
- Fig. 2: einen Schnitt entlang der Linie A-B in Fig. 1;
- Fig. 3: einen Schnitt entlang der Linie M-N in Fig. 1;
- Fig. 4: einen Schnitt entlang der Linie C-D in Fig. 1;
- Fig. 5: das durch Z gekennzeichnete Fenster aus Fig. 4 in Vergrößerung;
- Fig. 6: in Vergrößerung einen Schnitt entlang der Linie G-H in Fig. 1;
- Fig. 7: in Vergrößerung das Fenster Y aus Fig. 1; und
- Fig. 8: eine Ansicht der Vorrichtung entlang des Pfeils S in Fig. 1.

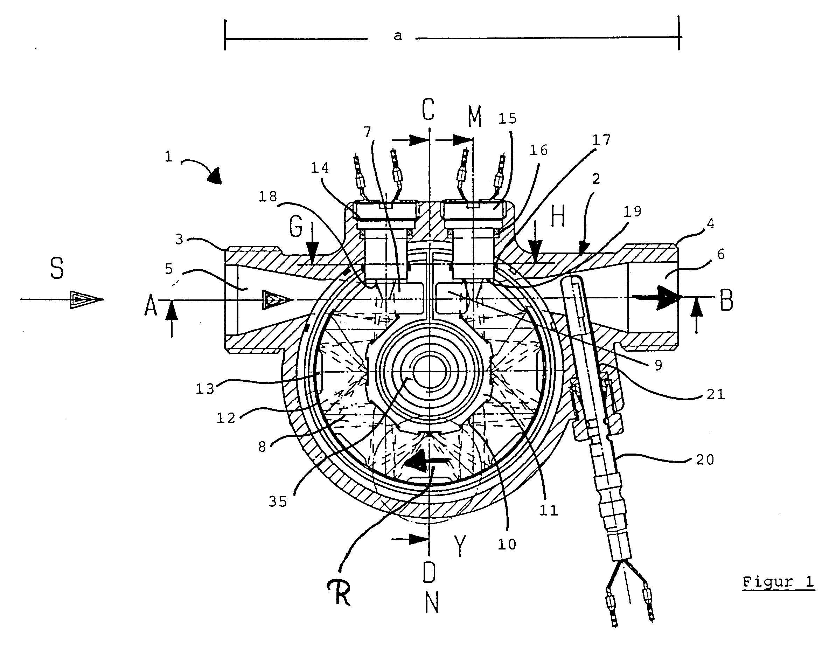

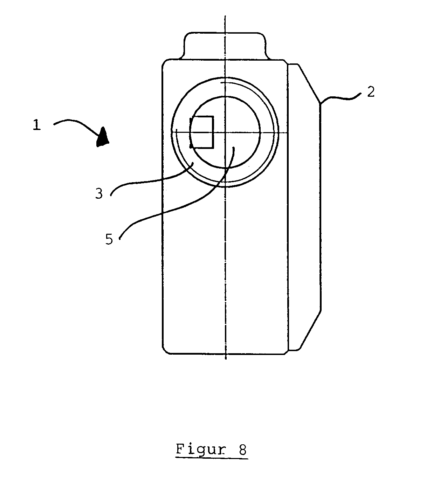

Die in den Figuren 1-8 dargestellte erfindungsgemäße Vorrichtung 1 zur Ultraschall-Durchflußmessung weist ein Gehäuse 2 mit einem Einlaßstutzen 3 sowie einem Auslaßstutzen 4 auf, die fluchtend zueinander auf einer gemeinsamen Achse angeordnet sind. Über den Einlaßstutzen 3 bzw. den Auslaßstutzen 4 ist die Vorrichtung 1 an zwei Leitungsenden einer Heizungsanlage anschließbar. Der Abstand der Stirnseiten beider Stutzen 3, 4 entspricht dabei dem Normabstand für den Einbau derartiger Durchflußmesser.

Zwischen dem Einlaßstutzen 3, der einen sich von außen nach innen verjüngenden Zulauf 5 aufweist, und dem Auslaßstutzen 4, dessen Ablauf 6 sich nach außen erweitert, sind im Gehäuse 2 der Einlaßbereich 7 in den ringförmig ausgebildeten Meßkanal 8 sowie der Auslaßbereich 9 angeordnet. Der ringförmige Meßkanal bzw. Ringkanal 8, der sich im wesentlichen unterhalb des Einlaß- bzw. Auslaßstutzens 3, 4 erstreckt, ist an seiner inneren radialen Begrenzungsfläche entlang des Strömungsweges des Fluids mit ebenen, planen Reflektorflächen 10 in Form gerader metallischer Spiegel versehen, welche an der radialen Innenwandung 11 eingelassen sind. Die radiale äußere, gebogene bzw. gekrümmte Begrenzungsfläche des Ringkanals 8 ist mit einer metallischen Schicht 12 versehen, die ebenfalls als Reflektorfläche dient. Entlang des durch die Pfeile gekennzeichneten Strömungsweges sind auf der metallischen Schicht 12 gleichmäßig beabstandet zueinander Dämpfungskörper 13 angeordnet. Hierdurch werden an der Außenwandung Reflektorflächen 12 ausgebildeten, deren Krümmungsradius immer gleich demjenigen der gesamten Außenwandung ist. Die Anordnung der metallischen Spiegel 10 sowie deren Länge und die Anordnung der Dämpfungskörper 13 auf der metallischen Schicht 12 ist derart, daß ein von einem der Ultraschallwandler 14, 15 ausgesandtes Ultraschallstrahlenbündel optimal den Strömungsweg im Meßkanal 8 durchläuft.

Wie insbesondere Figur 1 zu entnehmen ist, weist die durch die Pfeile bezüglich ihrer Strömungsrichtung gekennzeichnete Fluidströmung im dem Einlaß- und Auslaßbereich 7, 9 weitest abgewandten Ringkanalbereich R eine zur Strömungsrichtung im Einlaß- und Auslaßstutzen 5, 6 entgegengerichtete Strömungsrichtung auf. Dies wird durch die noch später genauer erläuterte Ausbildung und Anordnung der den Meßkanal 8 bildenden Teile 22, 23 erreicht.

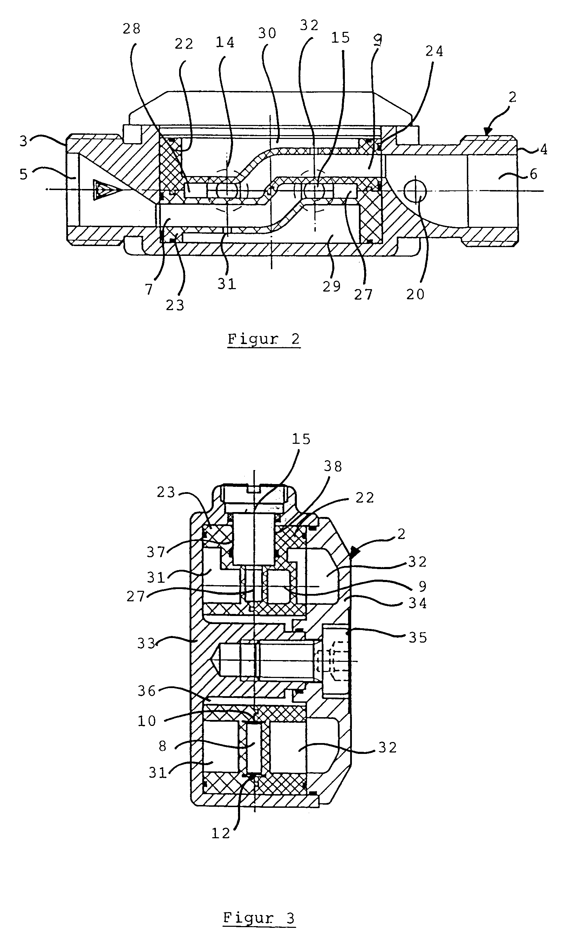

Oberhalb des Ringkanals 8 und insbesondere des Einlaßbereichs 7 sowie des Auslaßbereichs 9 sind die Meßköpfe 14, 15 (s. auch Fig. 2) der Ultraschallwandler an einer gemeinsamen Wandung beabstandet zueinander angeordnet. Hierzu weist das Gehäuse 2 entsprechende Ausnehmungen auf, in die die Meßköpfe 14, 15 eingesetzt sind. Die Meßköpfe 14, 15 sind dabei gegenüber dem Gehäuse 2 mittels entsprechender Dichtungen 16 abgedichtet. Eine Abdichtung gegenüber den den Meßkanal 8 sowie den Einlaß- und Auslaßbereich 7, 9 bildenden Teilen, auf die später genauer eingegangen wird, erfolgt ebenfalls mittels entsprechender Dichtungen 17, beispielsweise mittels O-Ringen. Die Meßköpfe 14, 15 der Ultraschallwandler können alternierend auf Sende- bzw. Empfangsbetrieb geschaltet werden. Auf diese Weise kann die Strömungsgeschwindigkeit des Fluids im Ringkanal 8 mittels des Laufzeitverfahrens ermittelt werden. Die Meßköpfe 14, 15 weisen eine senkrecht zu ihrer Oberfläche 18, 19 liegende Sende- und Empfangsrichtung auf. Sie sind gegenüber dem Ringkanal 8 derart beabstandet angeordnet, daß sich für das in den Ringkanal 8 einströmende Fluid ein möglichst großer Durchflußquerschnitt ergibt.

Bei Verwendung der Vorrichtung 1 zur Verbrauchsmessung in Heizungsanlagen ist ein Temperaturfühler 20 vorgesehen, der über eine Bohrung 21 im Gehäuse 2 in den Abfluß 6 des Auslaßstutzens 4 einragt.

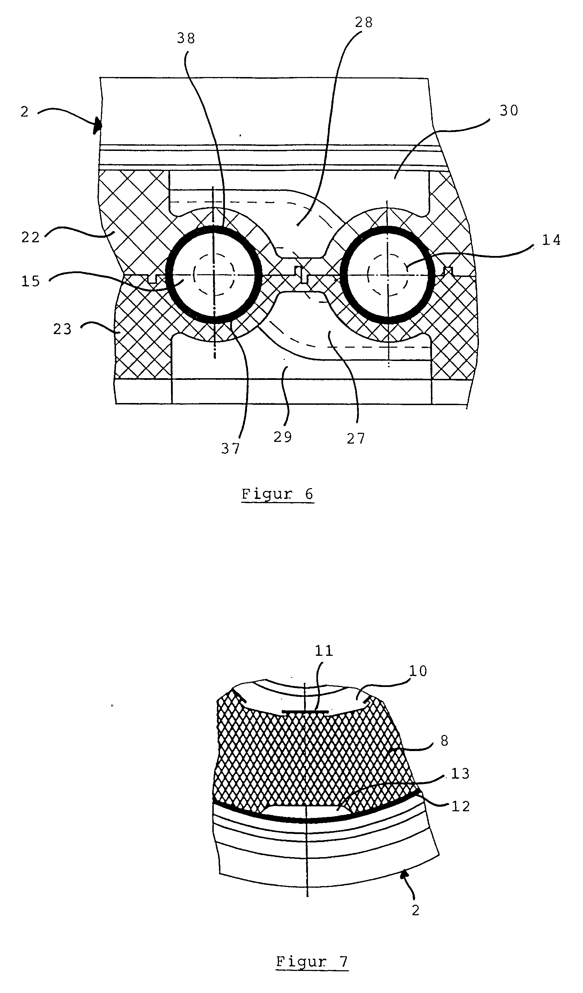

Wie insbesondere Fig. 2 und 3 zu entnehmen ist, werden der Ringkanal sowie der Einlaßbereich 7 und der Auslaßbereich 9 durch zwei identisch ausgebildete Innenteile 22, 23 gebildet, die jeweils wiederum mittels Dichtungen 24 gegenüber dem Gehäuse 2 abgedichtet sind. Die Innenteile 22, 23 sind dabei zueinander seitenverkehrt bzw. parallel und um 180° gedreht angeordnet. Sie weisen jeweils eine Art Rahmenstruktur auf und sind ineinander einsteckbar. Hierzu sind die Innenteile 22, 23 (s. Fig. 5) jeweils mit vorspringenden Wülsten 25 versehen, die in komplementär hierzu ausgebildete Aussparungen 26 des jeweils anderen Innenteils 22 haltend eingreifen. Die jeweils gleich ausgebildeten, durch Verbinden der Innenteile 22, 23 gebildeten Einlaß- bzw. Auslaßbereiche 7, 9 weisen eine sich vom Zulauf 5 bzw. Ablauf 6 bis zum eigentlichen Einlaß 27 bzw. Auslaß 28 unterhalb der Meßköpfe 14, 15 stetig verjüngende Ausbildung auf, wobei die Einlaß- bzw. Auslaßbereiche 7, 9 zum Einlaß 27 bzw. Auslaß 28 hin derart stetig abgewinkelt sind, daß Einlaß 27 und Auslaß 28 direkt unterhalb der Meßköpfe 14, 15 stetig in den Ringkanal 8 einmünden.

Wie den Figuren 2-6 entnehmbar ist, sind aufgrund der rahmenförmigen Struktur der Innenteile 22, 23 Zwischenräume 29, 30 zwischen den Einlaß- und Auslaßbereichen 7, 9 sowie dem Meßkanal 8 und dem Gehäuse 2 ausgebildet. Diese Zwischenräume 29, 30 sind im Einlaß- bzw. Auslaßbereich 7, 9 vor dem eigentlichen Einlaß bzw. Auslaß 27, 28 über Öffnungen 31, 32 mit den Einlaß- bzw. Auslaßbereichen 7, 9 für das Fluid verbunden. Entsprechend können sich die Zwischenräume 29, 30 mit Fluid füllen, und die Wandungen der Innenteile 22, 23 aus Kunststoff stehen jeweils unter gleichem Druck.

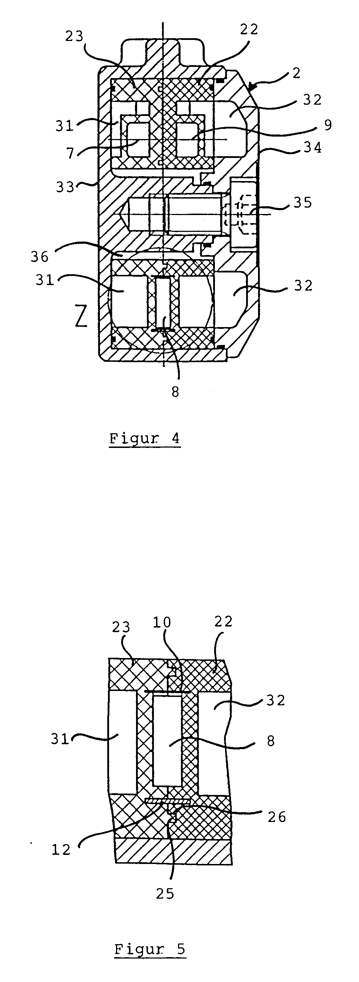

Wie insbesondere den Fig. 3 und 4 zu entnehmen ist, wird das Gehäuse 2 jeweils durch zwei Gehäuseteile 33, 34 gebildet. Diese gegeneinander abgedichteten Gehäuseteile 33, 34 werden jeweils zentral mittels einer Schraube 35 aneinander festgelegt. Hierzu weisen die Gehäuseteile 33, 34 zentral fluchtend zueinander entsprechende Aufnahmen auf. Wie den Fig. 3 und 4 weiterhin zu entnehmen ist, befindet sich auch zwischen den zentral gelegenen Teilen der Gehäuseteile 33, 34 und den Innenteilen 22, 23 jeweils ein Zwischenraum 36.

Der Einlaßbereich bzw. Auslaßbereich 7, 9 sowie der Ringkanal 8 weisen jeweils einen rechteckförmigen Querschnitt auf. Die Wandungen des Meßkanals 8 können dabei aufgerauht ausgebildet sein. Da der Einlaß 27 dem Auslaßstutzen 4 zugewandt und der Auslaß 28 dem Einlaßstutzen 3 zugewandt sind, weist die Vorrichtung 1 ein Verhältnis von Einbaulänge a zur Länge b des Meßkanals 8 von etwa 1:2,5 auf.

Die Innenteile 22, 23 (s. Fig. 3 und 6) weisen Ausnehmungen 37, 38 zur Aufnahme der Meßköpfe 14, 15 der Ultraschallwandler auf. Die Meßköpfe 14, 15 werden dabei jeweils zur Hälfte von jedem Innenteil 22, 23 umschlossen.

Die Funktionsweise der erfindungsgemäßen Vorrichtung 1 ist wie folgt:

Einer der als Sender dienenden Ultraschallwandler 14, 15 gibt ein Strahlenbündel in den durch ein Fluid durchströmten Meßkanal 8 ab, wobei das Strahlenbündel an den geraden metallischen Innenspiegeln 10 zur metallischen Außenwand bzw. zur metallischen Schicht 12 der äußeren radialen Begrenzungsfläche gespiegelt wird. Aufgrund der ringförmigen Ausbildung des Meßkanals 8 dient die durch die metallische Schicht gebildete Reflektorfläche 12 als eine Art Hohlspiegel und reflektiert das Strahlenbündel fokussierend zum nächsten Innenspiegel 10. Dies erfolgt so lange, bis das Strahlenbündel den ringförmigen Meßkanal 8 durchlaufen hat und vom als Empfänger dienenden Ultraschallwandler 15, 14 aufgenommen worden ist. Anschließend wird der Empfänger zum Sender, wobei nun der Vorgang umgekehrt abläuft und aufgrund der so ermittelten Laufzeitunterschiede letztendlich die Strömungsgeschwindigkeit des Fluids im Ringkanal bestimmt wird.

## Patentansprüche

1. Vorrichtung zur Ultraschall-Durchflußmessung von Fluiden in Rohrleitungen, insbesondere zur Verbrauchsmessung in Heizungsanlagen, mit einem vom Fluid durchströmten Meßkanal und mit Ultraschallwandlern, gekennzeichnet durch einen über seine Länge hin stetig seine Richtung gegenüber einem Einlaß- und Auslaßstutzen (3, 4) verändernden Meßkanal (8).

2. Vorrichtung nach Anspruch 1, dadurch gekennzeichnet, daß ein sich von einem Einlaßstutzen (3) stetig verjüngender Einlaßbereich (7) in den Meßkanal (8) übergeht, der wiederum in einen sich stetig erweiternden Auslaßbereich (9) für das Fluid mündet.

3. Vorrichtung nach Anspruch 2, gekennzeichnet durch einen stetigen Übergang zumindest zwischen Einlaßbereich (7) und Meßkanal (8).

4. Vorrichtung nach einem der Ansprüche 1 bis 3, dadurch gekennzeichnet, daß der Auslaßbereich (9) parallel zum Einlaßbereich (7), gegenüber diesem um 180° gedreht, angeordnet ist.

5. Vorrichtung nach einem der Ansprüche 1 bis 4, dadurch gekennzeichnet, daß die Ultraschallwandler (14, 15) oberhalb des Ein- bzw. Auslasses (27, 28) in den Meßkanal (8) angeordnet sind.

6. Vorrichtung nach einem der Ansprüche 1-5, dadurch gekennzeichnet, daß der Meßkanal (8) ellipsenförmig gebogen ausgebildet ist.

7. Vorrichtung nach einem der Ansprüche 1-5, dadurch gekennzeichnet, daß der Meßkanal (8) ringförmig gebogen ausgebildet ist.

8. Vorrichtung nach einem der Ansprüche 1-7, dadurch gekennzeichnet, daß das Verhältnis von Einbaulänge a der Vorrichtung (1) zur Länge b des Meßkanals (8) 1:2,5-3 beträgt.

9. Vorrichtung nach einem der Ansprüche 1-8, dadurch gekennzeichnet, daß innerhalb des Meßkanals (8) an dessen Wandungen Ultraschall-Reflektorflächen (10, 12) angeordnet sind.

10. Vorrichtung nach Anspruch 9, dadurch gekennzeichnet, daß die Reflektorflächen (10) an der in Richtung des Meßkanalinneren gekrümmten Innenwandung (11) als plane, ebene Flächen (10) ausgebildet sind.

11. Vorrichtung nach Anspruch 10, gekennzeichnet durch entlang des Strömungsweges des Fluids beabstandet zueinander an der durch die Innenwandung (11) des Meßkanals (8) gebildeten seitlichen Begrenzungsfläche festgelegte, gerade metallische Spiegel (10) als Reflektorflächen.

12. Vorrichtung nach Anspruch 11, dadurch gekennzeichnet, daß die der Innenwandung (11) gegenüberliegende seitliche Begrenzungsfläche der Außenwandung im Inneren des Meßkanals (8) mit einer metallischen Schicht (12) versehen ist.

13. Vorrichtung nach Anspruch 12, gekennzeichnet durch auf der metallischen Schicht (12) beabstandet zueinander entlang des Strömungsweges des Fluids angeordnete Dämpfungskörper (13).

14. Vorrichtung nach einem der Ansprüche 9 bis 13, dadurch gekennzeichnet, daß der Krümmungsradius der Reflektorflächen (12) an der Außenwandung des Meßkanals (8) dem Krümmungsradius der gesamten Außenwandung entspricht.

15. Vorrichtung nach einem der Ansprüche 1-14, gekennzeichnet durch zwei identisch ausgebildete, den Meßkanal (8) sowie den Einlaß- und Auslaßbereich (7, 9) ausbildende Innenteile (22, 23).

16. Vorrichtung nach Anspruch 15, dadurch gekennzeichnet, daß die Innenteile (22, 23) aus Kunststoff sind.

17. Vorrichtung nach Anspruch 15 oder 16, gekennzeichnet durch Öffnungen (31, 32) in den Wandungen der Innenteile (22, 23) im Ein- bzw. Auslaßbereich (7, 9) vor Übergang in den Meßkanal (8).

18. Vorrichtung nach Anspruch 17, gekennzeichnet durch Zwischenräume (29, 30, 36) zwischen dem durch die Innenteile (22, 23) gebildeten Ein- und Auslaßbereich (7, 9) sowie Meßkanal (8) und dem Gehäuse (2).

19. Vorrichtung nach einem der Ansprüche 15-18, gekennzeichnet durch als Halterungen vorspringende Wülste (25) zur Verbindung der den Meßkanal (8) sowie den Ein- und Auslaßbereich (7, 9) ausbildenden Innenteile (22, 23), wobei die Wülste (25) jeweils in komplementär ausgebildete Aussparungen (26) des jeweils anderen Innenteils (22, 23) haltend eingreifen.

20. Vorrichtung nach einem der vorangehenden Ansprüche, dadurch gekennzeichnet, daß der Meßkanal (8) einen im wesentlichen rechteckförmigen Querschnitt aufweist.

21. Vorrichtung nach einem der vorangehenden Ansprüche, dadurch gekennzeichnet, daß das die Innenteile (22, 23) aufnehmende Gehäuse (2) durch zwei Gehäuseteile (33, 34) gebildet ist.

22. Vorrichtung nach Anspruch 21, dadurch gekennzeichnet, daß die Gehäuseteile (33, 34) durch Verschrauben aneinander festgelegt sind.

23. Vorrichtung nach einem der vorangehenden Ansprüche, dadurch gekennzeichnet, daß die Innenteile (22, 23) Ausnehmungen (37, 38) zur Aufnahme der Meßköpfe (14, 15) der Ultraschallwandler aufweisen.

24. Vorrichtung nach Anspruch 23, dadurch gekennzeichnet, daß die Meßköpfe (14, 15) jeweils zur Hälfte von jedem Innenteil (22, 23) umschlossen sind.

25. Vorrichtung nach einem der vorangehenden Ansprüche, gekennzeichnet durch einen in den Strömungsweg des Fluids im Auslaßstutzen (4) einragenden Temperaturfühler (20).

26. Vorrichtung nach einem der vorangehenden Ansprüche, dadurch gekennzeichnet, daß der Auslaßbereich (9) gleich dem Einlaßbereich (7) ausgebildet ist.
